# EUROPEAN PATENT APPLICATION

(11) **EP 4 761 300 A1**
(43) Date of publication of application: **17.06.2026**
(21) Application number: 23948015.5
(22) Date of filing: 09.08.2023
(51) Int. Cl.: H04W 4/029

(54) **COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN); LI, Dexin, Dongguan, Guangdong 523860 (CN)
(74) Representative: Penza, Giancarlo
(86) International application number: PCT/CN2023/112068
(87) International publication number: WO 2025/030439

(57) **Abstract**

The present application relates to a communication method. The method comprises: a first communication device sending indication information, which is used for indicating auxiliary information corresponding to a target model. In the embodiments of the present application, a first communication device sends auxiliary information of a target model, which is conducive to ensuring the consistency of understanding, with respect to a model, of a transmitting end and a receiving end for the model, thereby ensuring normal use of the model.

## Description

### TECHNICAL FIELD

The present disclosure relates to the field of communications, and more particularly, to a communication method and a communication device.

### BACKGROUND

The applications of the Artificial-Intelligence-based (AI-based) solution in wireless communication systems are increasing, for example, Channel State Information (CSI) feedback, CSI prediction and the like implemented through AI. In model transmission, if the transmitting terminal has different understanding about the transmission model from the receiving terminal, the transmission model in the transmitting terminal may be unusable at the receiving terminal.

### SUMMARY

The embodiments of the present disclosure provide a communication method and a communication device, which can implement transformation, update, and use of a model version.

An embodiment of the present disclosure provides a communication method, which includes an operation that the first communication device transmits indication information for indicating auxiliary information corresponding to a target model.

An embodiment of the present disclosure provides a communication method, which includes an operation that a second communication device receives indication information for indicating auxiliary information corresponding to a target model.

An embodiment of the present disclosure provides a first communication device, which includes a transmitting unit configured to transmit indication information for indicating auxiliary information corresponding to a target model.

An embodiment of the present disclosure provides a second communication device, which includes a receiving unit configured to receive indication information for indicating auxiliary information corresponding to a target model.

An embodiment of the present disclosure provides a communication device including a transceiver, a processor, and a memory. The memory is configured to store a computer program, and the transceiver is configured to communicate with another device, and the processor is configured to call and run the computer program stored in the memory to cause the communication device to perform the communication method described above.

An embodiment of the present disclosure provides a chip for implementing the above-described communication method.

Specifically, the chip includes a processor for calling and running a computer program from a memory, to cause a device on which the chip is mounted to perform the above-described communication method.

An embodiment of the present disclosure provides a computer-readable storage medium for storing a computer program that, when run by a device, causes the device to execute the above-described communication method.

An embodiment of the present disclosure provides a computer program product including computer program instructions that cause a computer to execute the above-described communication method.

An embodiment of the present disclosure provides a computer program that, when run on a computer, causes the computer to execute the above-described communication method.

In the embodiments of the present disclosure, the first communication device transmits auxiliary information of a target model, which is beneficial to ensure that both transmitting and receiving terminals of the model have consistent understanding for the model and ensure normal use of the model.

### BRIEF DESCRIPTION OF THE DRAWINGS

FIG. 1 is a schematic diagram of an application scenario according to an embodiment of the present disclosure.
FIGS. 2A-2D are schematic diagrams of Al-based applications in wireless communication systems.
FIG. 3 is a schematic flowchart of a communication method according to an embodiment of the present disclosure.
FIG. 4A is a schematic flowchart of a communication method according to an embodiment of the present disclosure.
FIGS. 4B and 4C are schematic flowcharts of interaction between a UE and a base station in the communication method according to Figure 4A.
FIG. 5A is a schematic flowchart of a communication method according to an embodiment of the present disclosure.
FIGS. 5B and 5C are schematic flowcharts of interaction between a UE and a base station in the communication method according to FIG. 5A.
FIG. 6A is a schematic flowchart of a communication method according to an embodiment of the present disclosure.
FIGS. 6B, 6C, 6D, and 6E are schematic flowcharts of interaction between a UE and a base station in the communication method according to FIG. 6A.
FIG. 7 is a schematic flowchart of a communication method according to an embodiment of the present disclosure.
FIG. 8 is a schematic flowchart of a communication method according to an embodiment of the present disclosure.
FIG. 9 is a schematic flowchart of a communication method according to an embodiment of the present disclosure.
FIG. 10 is a schematic flowchart of a communication method according to an embodiment of the present disclosure.
FIGS. 11 and 12 are schematic flowcharts of Example 1 according to the present disclosure.
FIGS. 13 and 14 are schematic flowcharts of Example 2 according to the present disclosure.
FIG. 15 is a schematic block diagram of a first communication device according to an embodiment of the present disclosure.
FIG. 16 is a schematic block diagram of a second communication device according to an embodiment of the present disclosure.
FIG. 17 is a schematic block diagram of a communication device according to an embodiment of the present disclosure.
FIG. 18 is a schematic block diagram of a chip according to an embodiment of the present disclosure.
FIG. 19 is a schematic block diagram of a communication system according to an embodiment of the present disclosure.

### DETAILED DESCRIPTION

Hereinafter, the technical solutions in the embodiments of the present disclosure are described in conjunction to the drawings in the embodiments of the present disclosure.

The technical solutions of the embodiments of the present disclosure can be applied to various communication systems, such as a Long Term Evolution (LTE) system, an Advanced long term evolution (LTE-A) system, a New Radio (NR) system, an evolutionary system of an NR system, an LTE-based access to unlicensed spectrum (LTE-U) system, and an NR-based access to unlicensed spectrum (NR-U) System, a Non-Terrestrial Networks (NTN) system, a Universal Mobile Telecommunication System (UMTS), Wireless Local Area Networks (WLAN), Wireless Fidelity (WiFi), Fifth-Generation (5G) systems or other communication systems, etc.

Generally speaking, the number of connections supported by traditional communication systems is limited, and the number of connections is easy to implement. However, with the development of communication technology, the mobile communication system not only supports traditional communication, but also supports, for example, Device to Device (D2D) communication, Machine to Machine (M2M) communication, Machine Type Communication (MTC), vehicle-to-vehicle communication (V2V), or vehicle-to-everything communication (V2X), etc. The embodiment of the present disclosure can also be applied to these communication systems.

In an embodiment, the communication system in the embodiment of the present disclosure can be applied to a Carrier Aggregation (CA) scenario, a Dual Connectivity (DC) scenario, and a standalone (SA) deployment scenario.

In one embodiment, the communication system according to the embodiment of the present disclosure may be applied to an unlicensed spectrum, and the unlicensed spectrum may also be regarded as a shared spectrum. Alternatively, the communication system in the embodiment of the present disclosure may also be applied to a licensed spectrum, and the licensed spectrum may also be regarded as a non-shared spectrum.

The embodiments of the present disclosure describe various embodiments in conjunction with a network device and a terminal device. The terminal device may also be referred to as a User Equipment (UE), an access terminal, a subscriber unit, a subscriber station, a mobile station, a mobile terminal, a remote station, a remote terminal, a mobile device, a user terminal, a terminal, a wireless communication device, a user agent or a user device, and the like.

The terminal device may be a station (ST) in a WLAN, may be a cellular telephone, a cordless telephone, a Session Initiation Protocol (SIP) telephone, a Wireless Local Loop (WLL) station, a Personal Digital Assistant (PDA) device, a handheld device with wireless communication capabilities, a computing device or other processing device connected to a wireless modem, an in-vehicle device, a wearable device, a terminal device in a next generation communication system such as an NR network, or a terminal device in a future evolved Public Land Mobile Network (PLMN) network, or the like.

In an embodiment of the present disclosure, the terminal device may be deployed on land, including indoor or outdoor, handheld, wearable, or vehicle-mounted, or may also be deployed on the water (such as ships, etc.), or may be deployed in the air (e.g. on aircraft, balloons and satellites, etc.).

In an embodiment of the present disclosure, the terminal device may be a Mobile Phone (Mobile Phone), a tablet (Pad), a computer with a wireless transceiver function, a Virtual Reality (VR) terminal device, an Augmented Reality (AR) terminal device, a wireless terminal device in industrial control, a wireless terminal device in self-driving, a wireless terminal device in remote medical, a wireless terminal device in the smart grid, a wireless terminal device in transportation safety, a wireless terminal device in the smart city, a wireless terminal device in the smart home, or the like.

As an example and not limitation, in an embodiment of the present disclosure, the terminal device may also be a wearable device. The wearable devices can also be called wearable smart devices, which are a general term for applying wearable technology to intelligently design daily wear and develop the wearable devices, such as glasses, gloves, watches, clothing and shoes. The wearable device is a portable device that is worn directly on the body or integrated into the user's clothes or accessories. The wearable devices are not only hardware devices, but also realize powerful functions through software support, data interaction and cloud interaction. The generalized wearable smart devices include the device which has full functions, large size, and can realizes complete or partial functions without relying on smart phones, for example, smart watches or smart glasses, and also include a device that only focus on a certain type of application functions and is used in conjunction with other devices such as smart phones, for example, various smart bracelets and smart jewelry for physical sign monitoring.

In an embodiment of the present disclosure, the network device may be a device for communicating with a mobile device, may be an Access Point (AP) in the WLAN, may be an evolutionary Node B (eNB, or eNodeB) in the LTE, or a relay station or Access Point, or a vehicle-mounted device, a wearable device, a network device (gNB) in an NR network, a network device in a future evolved PLMN network, or a network device in an NTN network, or the like.

By way of example and not limitation, in embodiments of the present disclosure, the network device may have mobile characteristics, for example, the network device may be a mobile device. Alternatively, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, or the like. Optionally, the network device may be a base station provided on a land, a water area, or the like.

In an embodiment of the present disclosure, the network device may provide a service for a cell, and the terminal device communicates with the network device through a transmission resource (for example, frequency domain resource or spectrum resource) used by the cell. The cell may be a cell corresponding to the network device (for example, a base station), and the cell may belong to a macro base station or a base station corresponding to a Small cell. The small cell herein includes a metro cell, a micro cell, a pico cell, a femto cell or the like, and has characteristics of small coverage and low transmission power, and thus is suitable for providing data transmission services at a high speed.

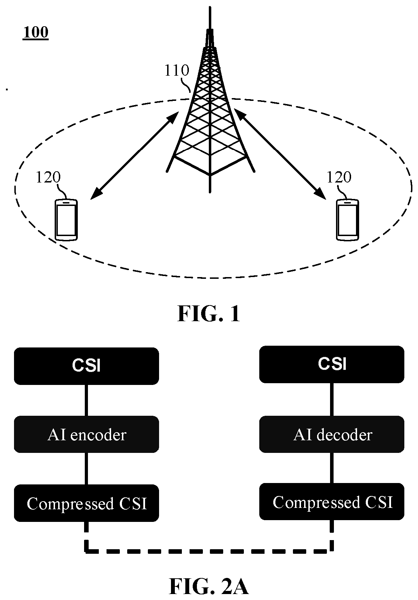

FIG. 1 exemplarily illustrates a communication system 100. The communication system includes a network device 110 and two terminal devices 120. In one embodiment, the communication system 100 may include a plurality of network devices 110, and the coverage range of each network device 110 may include other number of terminal devices 120, which is not limited in the embodiment of the present disclosure.

In one embodiment, the communication system 100 may further include other network entities such as a Mobility Management Entity (MME), an Access and Mobility Management Function (AMF), and the like, but the embodiments of the present disclosure are not limited thereto.

Among them, the network device may further include an access network device and a core network device. That is, the wireless communication system further includes a plurality of core networks for communicating with access network devices. The access network device may be an evolutionary node B (eNB or e-NodeB), a macro base station, a micro base station (also referred to as a "small base station"), a pico base station, an access point (AP), a transmission point (TP) or a new generation Node B (gNodeB), or the like in a long-term evolution (LTE) system, a next generation (NR) mobile communication system (a NR system) or an authorized auxiliary access long-term evolution (LAA-LTE) system.

It should be understood that a device having a communication function in the network/system in the embodiment of the present disclosure may be referred to as a communication device. Taking the communication system illustrated in FIG. 1 as an example, the communication device may include a network device and a terminal device having a communication function, and the network device and the terminal device may be specific devices in the embodiment of the present disclosure, and will not be described herein. The communication device may also include other devices in the communication system, for example, other network entities such as a network controller and a mobility management entity, which is not limited in the embodiments of the present disclosure.

It should be understood that the terms "system" and "network" are often used interchangeably herein. Herein, the term "and/or" is only an association relationship describing an association object, and means that there may be three relationships, for example, A and/or B, which may mean that A alone exists, A and B simultaneously exist, and B alone exists. In addition, the character "/" in this specification generally indicates that the related objects before and after are in an "or" relationship.

It should be understood that the "indication" mentioned in the embodiments of the present disclosure may be a direct indication, an indirect indication, or an associated relationship. For example, A indicates B, which may mean that A directly indicates B, for example, B can be acquired by A. or may be mean that A indicates B indirectly, for example, A indicates C, and B can be obtained through C, or may also indicate that there is an association relationship between A and B.

In the description of the embodiments of the present disclosure, the term "correspondence" may indicate that there is a direct or indirect correspondence relationship between the two objects, may indicate that there is a correlation relationship between the two objects, or may indicate a relationship between indicating and being instructed, configuring and being configured, or the like.

In order to facilitate understanding of the technical solutions of the embodiments of the present disclosure, the related technologies of the embodiments of the present disclosure are described below, and the related technologies below can be, as an optional solution, arbitrarily combined with the technical solutions of the embodiments of the present disclosure, and all of them belong to the scope of protection of the embodiments of the present disclosure.

### 1. AI-based wireless communication solutions

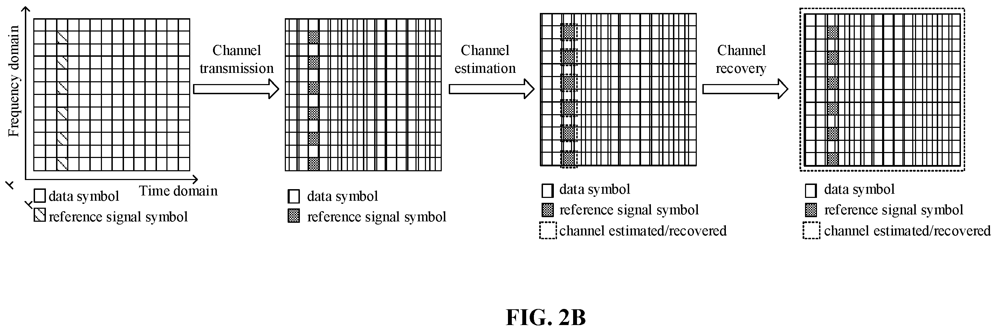

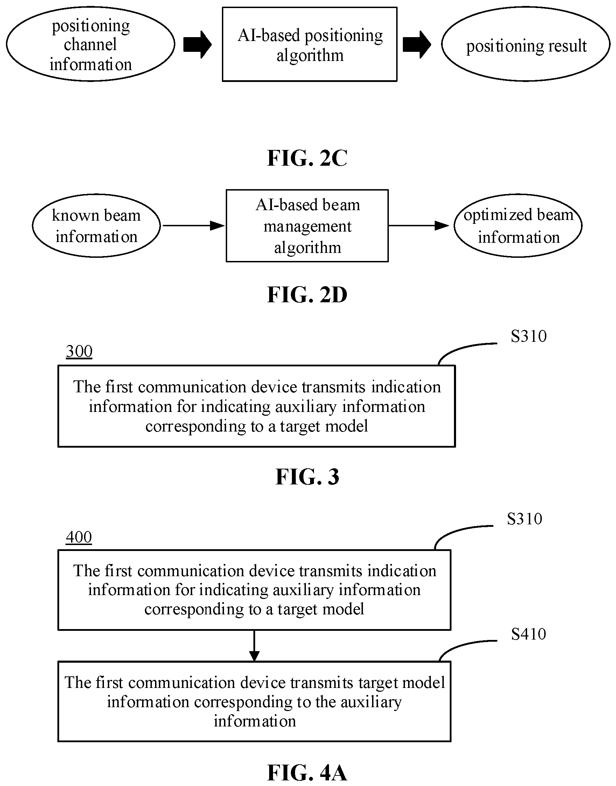

The CSI feedback issue is as shown in Fig. 2A, and an AI encoder and an AI decoder are introduced to realize compression and feedback of CSI information based on AI. The channel estimation issue is as shown in Fig. 2B, and an AI channel estimator is used to achieve high-performance estimation of a given channel. The positioning issue is as shown in Figure 2C, and the high-precision positioning result is obtained based on positioning channel information through the AI-based positioning algorithm. The beam management issue is as shown in FIG. 2D, and preferred or refined beam information or a prediction of beam information at a future time is obtained, based on known beam information through an AI-based beam management algorithm.

### 2. The purpose of AI/Machine Learning (ML) model transfer

The AI/ML solution in the wireless communication system generally includes three situations of training, acquiring and optimizing models, including: training, acquiring and optimizing the model at the UE side; training, acquiring and optimizing the model at the network side; and training, acquiring and optimizing the model on both sides of the UE and the network side. Similarly, The AI/ML solution in a wireless communication system generally includes three model deployment, including: deploying the model at the UE side; deploying the model at the network side; and deploying the model at both the UE and network side. But the above description does not mean that the node for training, acquiring, and optimizing the model is the same as the node for deploying the model.

If the node of acquiring the model and the location of deploying the model are consistent, for example, at the UE side, or at the network side, or at both the UE side and the network side, respectively, additional model transmission is not required in most cases. However, if the node of acquiring the model and the location of deploying the model are inconsistent, the model should be transmitted between nodes in different communication systems, thereby ensuring that AI/ML-related solutions in wireless communication systems can be effectively generated, transmitted, and used. Examples where the node of acquiring the model and the location of deploying the model are inconsistent include: the model is trained at the network side, but used at the UE side; or the model is trained at the UE side, but used at the network side; or the model is trained at a specific UE vendor or network vendor, but deployed and used by other UE vendors or network vendors.

Regarding the model transmission issue, a basic requirement is to ensure that both transmitting and receiving terminals have consistent understanding for the transmission model, and a problem that the model transmitted by the transmitting terminal cannot be used at the receiving terminal does not exist. When the transmitting and receiving terminals have the same manufacturer or from the same supplier, or different manufacturers that have been fully communicated, there is generally not the problem that the transmitting and receiving terminals have inconsistent understanding for the transmission mode, and the transmission mode cannot be used normally.

However, it should be pointed out that there are a large number of different manufacturers, suppliers, and solution providers, such as different chip manufacturers, terminal manufacturers, base station manufacturers, operators or the like in wireless communication system. It is inefficient to expect that all model transmissions are completed through negotiation and communication between any combination of manufacturers. Therefore, some standardized processes are needed to support that different manufacturers and devices that have not achieved sufficient communication can normally implement model transmission, as well as model identification, compilation, deployment, and use after transmission.

The model to be transmitted have different model frameworks, different model development environments, different deployment environments, and other differences in model implementation. These differences may bring difficulties to different receiving terminals in identifying, compiling, deploying, and using the model. Therefore, when designing the model transmission solution, the solution provided by the embodiment of the present disclosure may pay attention to indication and interaction about auxiliary information related to the model, especially related to the development framework, the environment, the version, the function library or the like of the model, in addition to model transmission. The auxiliary information is helpful for cross-node and cross-vendor usage of the model, or cross-node and cross-vendor transformation of the model.

In summary, the communication method provided by the embodiment of the present disclosure may include a method of indicating auxiliary information related to the AI/ML model, so as to ensure that the understanding for the transmitted AI/ML model can be uniform among different vendors or nodes, and complete conversion (or transformation), update, or use of the model version.

FIG. 3 is a schematic flowchart of a communication method 300 according to an embodiment of the present disclosure. This method may optionally be applied to the system shown in FIG. 1, but is not limited thereto. The method includes at least part of the following operation S310.

At S310, the first communication device transmits indication information for indicating auxiliary information corresponding to a target model.

In an embodiment of the present disclosure, the first communication device may be a terminal device or a network device. The indication information transmitted by the first communication device may indicate auxiliary information corresponding to one target model, or may indicate auxiliary information corresponding to multiple target models. The indication information may include content of the auxiliary information, or may include an identification of the auxiliary information. The auxiliary information may be used to determine one or more of the target model, a portion of content of the target model, an identification of the target model, a portion of an identification of the target model, a functionality identification of the target model, and a portion of the functionality identification of the target model. The second communication device that receives the indication information may parse, identify, compile, deploy, use, and transform or the like the target model based on the auxiliary information indicated by the indication information. The auxiliary information of the model may include information such as development framework, an environment, a version, a library functions, etc. Different target models may correspond to different pieces of auxiliary information or the same auxiliary information. For example, model A and model B have the same development framework, but model B and model C have different development frameworks. In the embodiment of the present disclosure, the operation of transmitting the auxiliary information by the first communication device is beneficial to ensure that both transmitting and receiving ends of the model have consistent understanding for the model and ensure normal use of the model. For example, the normal use after model transmission can be realized through on-demand transmission and on-demand transformation of the model.

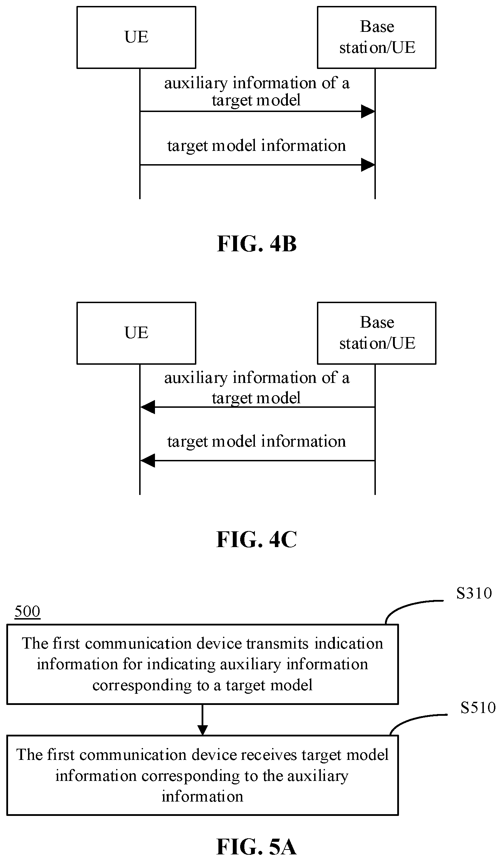

FIG. 4A is a schematic flowchart of a communication method 400 according to an embodiment of the present disclosure. The method may include one or more characteristics of the embodiment of the method 300 described above. In an embodiment, the method further includes an operation S410 that the first communication device transmits target model information corresponding to the auxiliary information. An execution sequence of S410 and S310 is not limited, and for example, S310 may be executed before S410, or S410 may be executed before S310. For example, as shown in FIG. 4B, the UE transmits the auxiliary information of the target model, and the UE transmits the target model information. As shown in FIG. 4C, the base station transmits auxiliary information of the target model, and the base station transmits the target model information.

In an embodiment, the target model information includes at least one of a target model, a target model identification, and a functionality identification of the target model. In an embodiment of the present disclosure, the target model transmitted by the first communication device may include a structure, parameters, data, and the like of the target model. The first communication device may also transmit the identification of the target model, and the second communication device that receives the identification of the target model may search for the structure, parameters, data, and the like of the target model based on the identification of the target model. The first communication device may also transmit a functionality identification of the target model, and the second communication device that receives a functionality identification may search the structure, parameters, data, and the like of the target model based on the functionality identification.

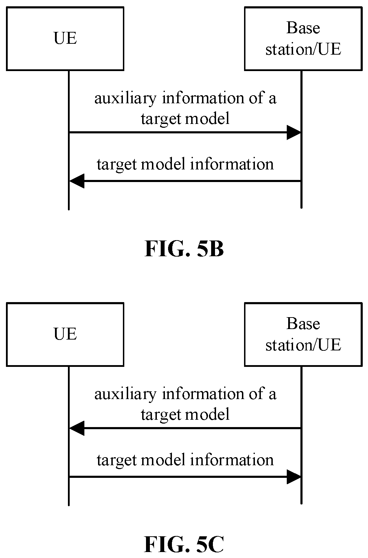

FIG. 5A is a schematic flowchart of a communication method 500 according to an embodiment of the present disclosure. The method may include one or more characteristics of the embodiment of the method 300 described above. In an embodiment, the method further includes an operation S510 that the first communication device receives target model information corresponding to the auxiliary information. An execution sequence of S510 and S310 is not limited, and for example, S310 may be executed before S510, or S510 may be executed before S310. For example, as shown in FIG. 5B, the UE transmits the auxiliary information of the target model and the base station transmits the target model information, and the UE may receive the target model information from the base station. As shown in FIG. 5C, the base station transmits auxiliary information of the target model and the UE transmits the target model information, and the base station may receive the target model information from the UE.

In an embodiment, the target model information includes at least one of a target model, an identification of a target model, and a functionality identification of the target model. Reference may be made to the relevant explanations in the above method embodiments.

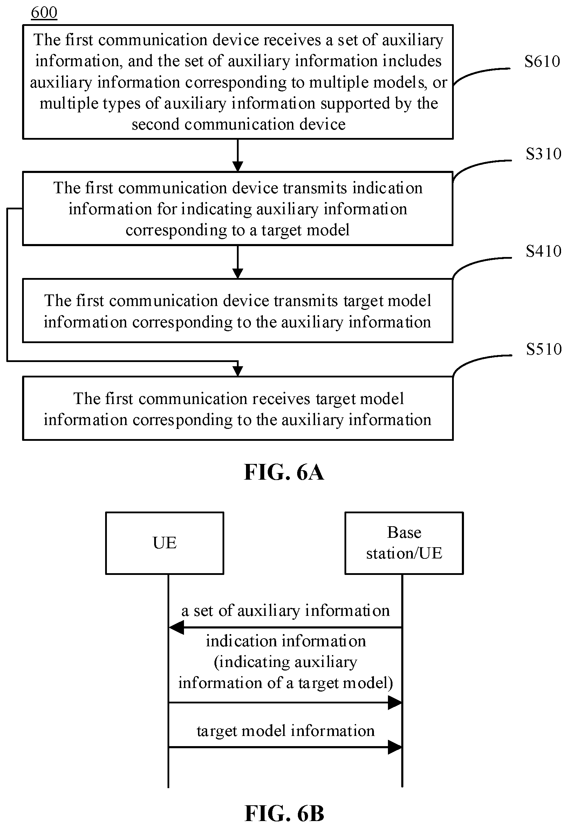

FIG. 6A is a schematic flowchart of a communication method 600 according to an embodiment of the present disclosure. The method may include one or more characteristics of the embodiment of the method described above. In an embodiment, the method further includes an operation S610.

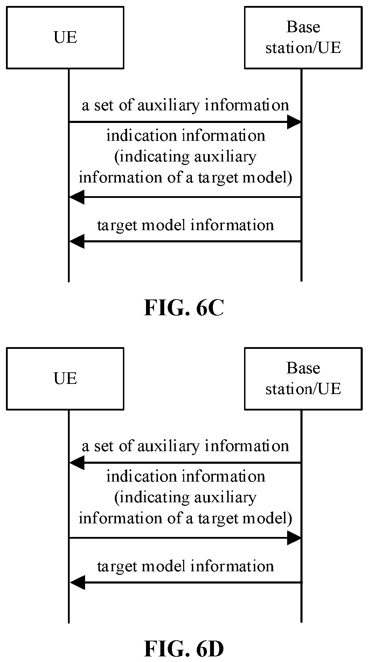

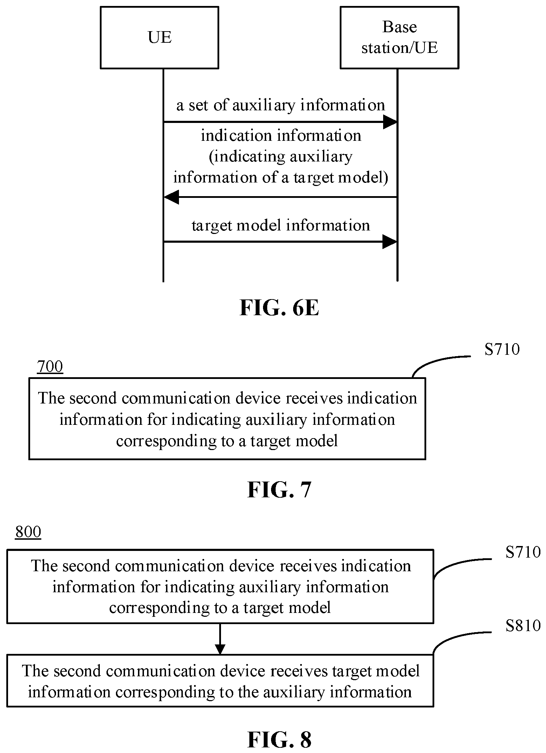

At S610, the first communication device receives a set of auxiliary information, and the set of auxiliary information includes auxiliary information corresponding to multiple models or auxiliary information of multiple types supported by the second communication device. For example, S610 is executed first, and S310 is executed secondly, and then S410 is executed. For another example, S610 is executed first, S310 is executed secondly, and then S510 is executed. For example, as shown in FIG. 6B, the base station transmits a supported set of auxiliary information, and the UE may receive the set of auxiliary information from the base station. The UE transmits indication information indicating auxiliary information of the target model, and the UE transmits the target model information. As shown in FIG. 6C, the UE transmits the supported set of auxiliary information, and the base station may receive the set of auxiliary information from the UE. The base station transmits indication information indicating auxiliary information of the target model, and the base station transmits the target model information. For another example, as shown in FIG. 6D, the base station transmits the supported set of auxiliary information, and the UE may receive the set of auxiliary information from the base station. The UE transmits indication information indicating auxiliary information of the target model, and the base station transmits the target model information. As shown in FIG. 6E, the UE transmits the supported set of auxiliary information, and the base station may receive the set of auxiliary information from the UE, and the base station transmits indication information indicating auxiliary information of the target model, and the UE transmits the target model information.

In an embodiment, the auxiliary information indicates at least one of development framework information, version information of a development environment, and function library information used for development. The version information of the development environment may be development environment information or development version information. The auxiliary information may respectively indicate the development framework information, the version information of the development environment, and the library information used for development, or may jointly indicate two or more of the development framework information, the version information of the development environment, and the library information used for development.

In an embodiment, the development framework information includes at least one of: TensorFlow, PyTorch, Open Neural Network Exchange (ONNX), Keras, Caffe2, MXNet, ML.NET, Scikit-learn, Tensor, Theano, Computational Network Toolkit (CNTK).

In an embodiment, the version information of the development environment includes at least one of version information of TensorFlow, version information of PyTorch, version information of ONNX, version information of Keras, version information of Caffe2, version information of MXNet, version information of ML.NET, version information of Scikit-learn, version information of Tensor, version information of Theano, version information of CNTK, version information of Android, and version information of IOS.

In an embodiment, the function library information used for the development includes at least one of: Library information of TensorFlow, library information of PyTorch, library information of ONNX, library information of Keras, library information of Caffe2, library information of MXNet, library information of ML.NET, library information of Scikit-learn, library information of Tensor, library information of Theano, and library information of CNTK.

In an embodiment of the present disclosure, the set of auxiliary information may include auxiliary information of multiple types supported by the second communication device, or may include auxiliary information corresponding to multiple models. The first communication device which receives the set of auxiliary information may select desired auxiliary information from the set of auxiliary information.

For example, the set of auxiliary information includes auxiliary information 1, auxiliary information 2, and auxiliary information 3. The auxiliary information 1 includes development framework information "TensorFlow", version information "version 2.0 of TensorFlow" of the development environment, and function library information "function library information of TensorFlow" used for development. The auxiliary information 2 includes development framework information "TensorFlow", and version information "version 2.4" of the development environment. The auxiliary information 3 includes development framework information "PyTorch", and version information "version 1.5 of PyTorch" of the development environment. After receiving the set of auxiliary information, the first communication device may select auxiliary information 1 and indicate auxiliary information 1 to the second communication device. The second communication device may parse and transform a model corresponding to the auxiliary information 1 based on development framework information "TensorFlow", version information "version 2.0 of TensorFlow" of the development environment, and function library information "function library information of TensorFlow" used for development in the auxiliary information 1.

In an embodiment of the present disclosure, the auxiliary information may include some bits for indicating one or any combination of development framework information, version information of the development environment, and function library information used for development. For example, multiple bits indicate multiple pieces of development framework information, multiple bits indicate multiple pieces of version information of the development environment, and multiple bits indicate multiple pieces of function library information used for development. Multiple bits indicating the same type of information may be considered a group of bits.

In an embodiment, the indication information includes a first set of bits for indicating multiple different pieces of development framework information. For example, if the first set of bits includes 5 bits, at most 32 different pieces of initial development framework information can be distinguished. If the first set of bits includes 6 bits, at most 64 different pieces of initial development framework information can be distinguished.

In an embodiment, the indication information includes multiple first numerical values for indicating multiple different pieces of development framework information. For example, two decimal numbers can be used to distinguish at most 100 different pieces of initial development framework information.

In an embodiment, the indication information includes a second set of bits for indicating multiple different pieces of version information of development environments. For example, the second set of bits includes 5 bits which can distinguish at most 32 different pieces of version information of development environment.

In an embodiment, the indication information includes multiple second numerical values for indicating multiple different pieces of version information of development environments. For example, one decimal number can distinguish at most 10 different pieces of version information of the development environment, and two decimal numbers can distinguish at most 100 different pieces of version information of the development environment.

In an embodiment, the indication information includes a third set of bits for indicating multiple different pieces of function library information used for development. For example, the third set of bits includes 7 bits, which may distinguish at most 128 different pieces of initial library information.

In an embodiment, the indication information includes multiple third numerical values for indicating multiple different pieces of function library information used for development. For example, two decimal numbers can distinguish at most 100 different pieces of library information used for development, and three decimal numbers can distinguish at most 1000 different pieces of library information used for development.

In an embodiment, the indication information includes a fourth set of bits for indicating a combination of at least two of development framework information, version information of a development environment, and function library information used for development. For example, the fourth group of bits includes seven bits, in which, the first two bits indicate development framework information, the third to fourth bits indicate version information of the development environment, and the fifth to sixth bits indicate function library information used during the development for version information of the development environment.

In an embodiment, the indication information includes multiple fourth numerical values for indicating a combination of at least two of development framework information, version information of a development environment, and function library information used for development. For example, two decimal numbers can distinguish at most 100 different combinations of development framework information, version information of a development environment, and library information used for development. For example, the value "1" corresponds to the development framework information "TensorFlow", the version information "version 2.0 of TensorFlow" of the development environment, and the function library information "the function library information of TensorFlow" used for development. The value "2" corresponds to the development framework information "TensorFlow" and the version information "version 2.4 of TensorFlow" of the development environment. For another example, the value "3" corresponds to the development framework information " PyTorch" and the version information "version 1.5 of PyTorch" of the development environment.

The binary and decimal values described above are merely exemplified and not restrictive, and other ways may also be used for distinguishing various auxiliary information or a combination thereof in a set of auxiliary information, for example, a hexadecimal value or the like.

In an embodiment, the bits and/or numerical values in the indication information may also indicate the identification of the auxiliary information. For example, the set of auxiliary information received by the first communication device includes auxiliary information 1, auxiliary information 2, and auxiliary information 3. Two specific bits in the indication information transmitted by the first communication device have a value 01 to indicate auxiliary information 1, 10 to indicate auxiliary information 2, and 11 to indicate auxiliary information 3. Alternatively, one decimal value in the indication information transmitted by the first communication device is equal to 1 to indicate auxiliary information 1, 2 to indicate auxiliary information 2, and 3 to indicate auxiliary information 3.

In an embodiment, the target model includes one of the multiple models, or the auxiliary information corresponding to the target model is one of multiple types of auxiliary information supported by the second communication device. For example, the set of auxiliary information transmitted by the UE to the base station includes auxiliary information corresponding to the model A, auxiliary information corresponding to the model B, and auxiliary information corresponding to the model C. The base station receives the set of auxiliary information, selects the auxiliary information corresponding to the model C and transmits it to the UE, and the UE transmits information of the model C, such as the model C, a model identification of the model C, or a functionality identification of the model C, to the base station.

In an embodiment, the auxiliary information is used to assist a second communication device in parsing the target model or transforming the target model, and the second communication device is a device that receives the auxiliary information.

In an embodiment, the first communication device is a network device, and the second communication device that receives the indication information is a terminal device.

In an embodiment, a bearing manner of the indication information includes at least one of a broadcast message, a Radio Resource Control (RRC) message, a Medium Access Control (MAC) control unit (CE), Downlink Control Information (DCI), a downlink message in a random access procedure, a Physical Downlink Control Channel (PDCCH), a Physical Downlink Shared Channel (PDSCH), an artificial intelligence (AI)/machine learning (ML)-dedicated downlink channel, and a network-side capability indication.

In an embodiment, the first communication device is a terminal device, and the second communication device that receives the indication information is a network device.

In an embodiment, a bearing manner of the indication information includes at least one of an RRC message, Uplink Control Information (UCI), an uplink message in a random access procedure, a physical uplink control channel (PUCCH), a physical uplink shared channel (PUSCH), an AI/ML-dedicated uplink channel, and a terminal device capability reporting.

In an embodiment, the first communication device is a first terminal device, and the second communication device that receives the indication information is a second terminal device.

In one embodiment, a bearing manner of the indication information includes at least one of sidelink control information (SCI), a Physical Sidelink Control Channel (PSCCH), and a Physical Sidelink Shared Channel (PSSCH).

In an embodiment, the first communication device is a first network device, and the second communication device that receives the indication information is a second network device.

FIG. 7 is a schematic flowchart of a communication method 700 according to an embodiment of the present disclosure. This method may optionally be applied to the system shown in FIG. 1, but is not limited thereto. The method includes at least part of operation S710.

At S710, the second communication device receives indication information for indicating auxiliary information corresponding to the target model.

FIG. 8 is a schematic flowchart of a communication method 800 according to an embodiment of the present disclosure. The method may include one or more features in the embodiment of the method 700 described above. In an embodiment, the method further includes operation S810 that the second communication device receives target model information corresponding to the auxiliary information.

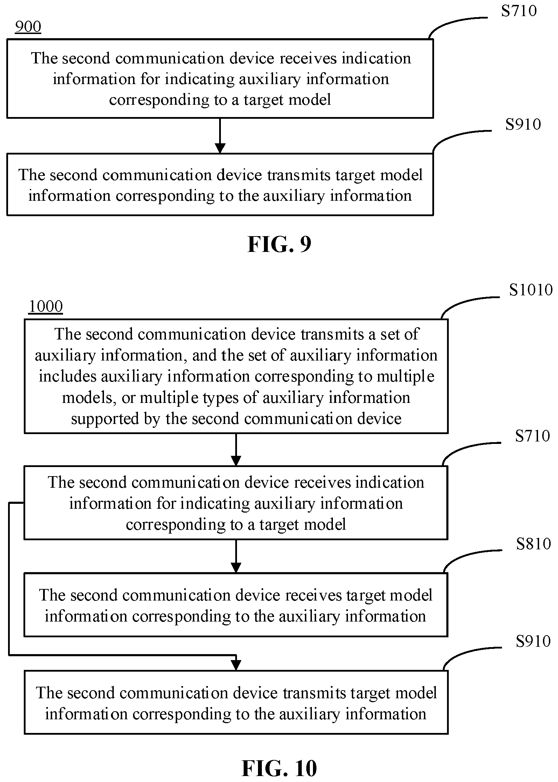

FIG. 9 is a schematic flowchart of a communication method 900 according to an embodiment of the present disclosure. The method may include one or more features in the embodiment of the method 700 described above. In an embodiment, the method further includes operation S910 that the second communication device transmits target model information corresponding to the auxiliary information.

In an embodiment, the target model information includes at least one of a target model, an identification of the target model, and a functionality identification of the target model.

FIG. 10 is a schematic flowchart of a communication method 1000 according to an embodiment of the present disclosure. The method may include one or more features of the embodiments of the methods 700, 800, 900 described above. In an embodiment, the method further includes operation S1010 that the second communication device transmits a set of auxiliary information, and the set of auxiliary information includes auxiliary information corresponding to multiple models, or multiple types of auxiliary information supported by the second communication device.

In an embodiment, the target model includes one of the multiple models, or the auxiliary information corresponding to the target model is one of multiple types of auxiliary information supported by the second communication device.

In an embodiment, the auxiliary information is used to assist a second communication device in parsing the target model or transforming the target model, and the second communication device is a device that receives the auxiliary information.

In an embodiment, the second communication device is a terminal device, and the first communication device that transmits the auxiliary information is a network device.

In an embodiment, a bearing manner of the indication information includes at least one of a broadcast message, an RRC message, a MAC CE, DCI, a downlink message in a random access procedure, a PDCCH, a PDSCH, an AI/ML-dedicated downlink channel, and a network-side capability indication.

In an embodiment, the second communication device is a network device, and the first communication device that transmits the auxiliary information is a terminal device.

In an embodiment, the bearing manner of the indication information includes at least one of an RRC message, UCI, an uplink message in a random access procedure, a PUCCH, a PUSCH, an AI/ML-dedicated uplink channel, and UE capability reporting.

In an embodiment, the second communication device is a second terminal device, and the first communication device that transmits the auxiliary information is a first terminal device.

In an embodiment, the bearing manner of the indication information includes at least one of SCI, a PSCCH, a PSSCH.

In an embodiment, the auxiliary information indicates at least one of: development framework information, version information of a development environment, and function library information used in development.

In an embodiment, the indication information includes a first set of bits for indicating multiple different pieces of development framework information.

In an embodiment, the indication information includes multiple first numerical values for indicating multiple different pieces of development framework information.

In an embodiment, the indication information includes a second set of bits for indicating multiple different pieces of version information of development environments.

In an embodiment, the indication information includes multiple second numerical values for indicating multiple different pieces of version information of development environments.

In an embodiment, the indication information includes a third set of bits for indicating multiple different pieces of library information used for development.

In an embodiment, the indication information includes multiple third numerical values for indicating multiple different pieces of library information used for development.

In an embodiment, the indication information includes a fourth set of bits for indicating a combination of at least two of development framework information, version information of a development environment, and function library information used for development.

In an embodiment, the indication information includes multiple fourth numerical values for indicating a combination of at least two of development framework information, version information of a development environment, and function library information used for development.

In an embodiment, the development framework information includes at least one of TensorFlow, PyTorch, ONNX, Keras, Caffe2, MXNet, ML.NET, Scikit-learn, Tensor, Theano, CNTK.

In an embodiment, the version information of the development environment includes at least one of version information of TensorFlow, version information of PyTorch, version information of ONNX, version information of Keras, version information of Caffe2, version information of MXNet, version information of ML.NET, version information of Scikit-learn, version information of Tensor, version information of Theano, version information of CNTK, version information of Android, and version information of IOS.

In an embodiment, the function library information used by the development includes at least one of: Library information of TensorFlow, library information of PyTorch, library information of ONNX, library information of Keras, library information of Caffe2, library information of MXNet, library information of ML.NET, library information of Scikit-learn, library information of Tensor, library information of Theano, and library information of CNTK.

For specific examples of executing the methods 700, 800, 900, and 1000 by the second communication device in the embodiment, reference may be made to the related description of the second communication device in the above-described methods 300, 400, 500 and 600, and will not be repeated here for the sake of brevity.

The communication method according to the embodiment of the present disclosure may include a method for transmitting auxiliary information of an AI/ML model. For example, in addition to transmitting and/or indicating the model, the first node may indicate auxiliary information of a model, so that the second node can normally use the model. For another example, the second node indicates and/or requests a model constructed in a specified condition, so that the first node can provide a model as needed. The above-mentioned auxiliary information of the model may include information such as a development framework, a version of an environment, a library functions, etc. The indicating the auxiliary information is to ensure that both sending and receiving terminals have a consistent understanding for the model during model transmission, and can realize the normal use after model transmission through on-demand transmission and on-demand transformation of the model. In the embodiment of the present disclosure, according to a difference of the model at the network side and the UE side, a method in which the model provider indicates the model development framework, the version of the environment and the library function condition, and a method in which the model user indicates the desired development framework, the version of the environment and the library function conditions are provided. Multiple specific examples are given below.

In Example 1, the first node indicates initial model auxiliary information, the first node transmits the model.

The first node in this example may be a UE or a network,
An indication process of the first node may include at least one of the following.

For example, the network (or UE) may transmit a Model A to the UE (or network). The manner of transmitting the model between the network and the UE may include at least one of: directly transmitting a model, and indicating a model ID and/or functionality ID. The model A given by the network (or UE) may be developed under specific conditions (such as a development framework, a development environment, a version, a function library used in development). When the network (or the UE) transmits the model A to the UE (or the network), the auxiliary information such as the initial development framework, the version of an initial development environment and the library functions supported by the initial model can be notified to the UE (or the network), so that the UE (or the network) can effectively and efficiently identify, compile, deploy and use the model.

As another example, the network (or UE) may transmit model A to the UE (or network). The manner of transmitting the model between the network and the UE may include at least one of: directly transmitting the model, and indicating a model ID and/or functionality ID. The model A given by the network (or UE) may be developed under specific conditions (such as a development framework, a version of a development environment, a function library used in development). The UE (or network) may identify, compile, deploy and use the model only under other specific conditions (such as a development framework, the version of the environment, a function library used in development, etc.). In this case, the UE (or network) needs performing model transformation to ensure the normal identification, compilation, deployment, and use of the model. When the network (or the UE) transmits model A to the UE (or the network), the performing the above-described transformation operation also needs confirming much initial model information, for example, the above-described initial development condition, such as the initial development framework, the version of the initial development environment, and the library functions supported by the initial model. Therefore, the network (or UE) needs transmitting the auxiliary information of the model A to the UE (or network).

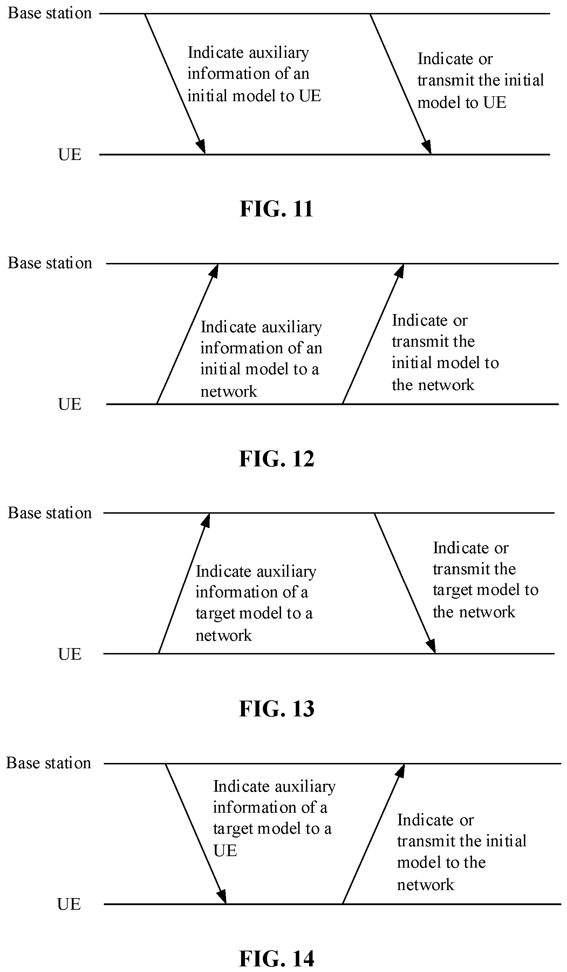

Taking the above two situations as an example, as shown in FIGs. 11 and 12, in addition to that the network transmits the model (by directly transmitting the model, or indicating the model ID and functionality ID) to the UE, the first node (network or UE) notifies the second node (UE or network) of the auxiliary information of the model, so as to ensure that different vendors or nodes can have the same understanding of the transmitted AI/ML model and implement transformation, update, and use of the model version. The first node indicates the auxiliary information of the model to the second node, the second node is a UE when the first node is a network device, and the second node is a network device when the first node is a UE. The first node and the second node each may be the UE. The first node and the second node each may be network device.

The first node transmits the model (by directly transmitting the model, or indicating the model ID and functionality ID) to the second node, and the timing order between transmitting the model and transmitting the auxiliary information of the model by first node may include first indicating and transmitting the model by the first node, or first transmitting the auxiliary information of the model by the first node, or simultaneously indicating and transmitting the model and the auxiliary information of the model to the second node by the first node.

The content of the auxiliary information of the model may include one or more of initial development framework information, version information of an initial development environment, and supported or used initial function library information.

The initial development framework information is described below.

Examples of the initial development framework information include TensorFlow, PyTorch, ONNX, Keras, Caffe2, MXNet, ML.NET, Scikit-learn, Tensor, Theano, CNTK and other development frameworks.

The indicating the initial development framework information has one or more of the following effects: (1) beneficial for the second node to use the corresponding development framework to parse the transmitted model, or (2) beneficial for the second node to perform model transformation based on the initial development framework information.

A manner of indicating the initial development framework information include, for example, N1 bits such as 6 bits for distinguishing up to 64 different pieces of development framework information, or N1 numbers such as 2 decimal numbers for distinguishing up to 100 different pieces of development framework information.

The version information of the initial development environment is described below.

The initial development environment information herein may be used for indicating characteristics of the initial development environment of the model, such as a version of the initial development framework, different versions caused by software update and development, different versions corresponding to different operating systems, and different versions corresponding to different devices.

The version information is, for example, version information (for example, version 2.0, version 2.4, version 2.7) of TensorFlow, version information (for example, version 1.5, version 1.8) of PyTorch, version information of ONNX, version information of Keras, version information of Caffe2, version information of MXNet, version information of ML.NET, version information of Scikit-learn, version information of Tensor, version information of Theano, version information of CNTK, and version information of a model development environment, and for another example, Android version, IOS version.

If the development frameworks adopted by the UE and the network are different, a problem that the model cannot be identified, compiled, deployed and used after the model transmission exists. Similarly, if the UE and the network have inconsistent understanding for the version of the development environment under the same development framework, the above-mentioned model cannot be identified, compiled, deployed and used after the model transmission, and the above-mentioned version information of the development environment of the model should be indicated.

A manner of indicating the version information of the development environment include, for example, N2 bits such as 5 bits for distinguishing up to 32 different pieces of initial version information of the development environment or N2 numbers such as 2 decimal numbers for distinguishing up to 100 different pieces of version information of the initial development environment.

It should be noted here that the development framework may be indicated independently from or may be indicated jointly with the version of the development environment. In case that the development framework is indicated jointly with the version of the development environment, when the information (bits) indicating the development framework is different, even if the bits indicating the version of the development environment have identical values, the version information of the development environment indicated by the bits indicating the version of the development environment may be different. For example, the first 6 bits in 000001001 indicate a first development framework, and the last 3 bits 001 indicate a first development version under the first development framework, and the first 6 bits in 000002001 indicate a second development framework, and the last 3 bits 001 indicate a first development version under the second development framework.

The supported or used initial function library information is described below.

If the supported function libraries of the UE and the network are different, a problem that the model cannot be identified, compiled, deployed and used after transmission may exist. For example, the base station transmits a model to the UE, and a first function library is used in development of the model. If the UE side does not have the first function library when using the model, or a transformation tool does not have the first function library or does not have transformation capability of the first function library when the UE side performs model transformation, the UE side fails to use or transform the model.

The supported and used library information may be indicated by, for example, library information of used TensorFlow, library information of PyTorch, library information of ONNX, library information of Keras, library information of Caffe2, library information of MXNet, library information of ML.NET, library information of Scikit-learn, library information of Tensor, library information of Theano, library information of CNTK, library information related to development of the model, and the like.

A manner of indicating the supported and used library information includes, for example, N3 bits such as 7 bits for distinguishing up to 128 different pieces of initial function library information, or N3 numbers such as 2 decimal numbers for distinguishing up to 100 different pieces of initial function library information.

Similarly, the supported and used library information may be indicated independently from or jointly with the development framework and the version of the development environment.

A manner of indicating the auxiliary information of the model may be one or more of the following manners.

When the network indicates the auxiliary information of the model to the UE, one or more of the following manners may be used: a broadcast message such as MIB, SIB1, SIBx; an RRC message; an MAC CE; a DCI message; a downlink message in a random access procedure, such as MsgB, Msg2, Msg4; a PDCCH; a PDSCH; a AI/ML-dedicated downlink channel, and network-side capability indication.

When the UE indicates the auxiliary information of the model to the network, one or more of the following manners may be used: an RRC message, a UCI message, an uplink message in a random access procedure such as MsgA and Msg3, a PUCCH, a PUSCH, an AI/ML-dedicated uplink channel, and UE capability reporting.

In Example 2, the second node indicates target model auxiliary information, and the first node transmits the model.

In addition to the case described in Example 1, there is a case in which the second node indicates auxiliary information of the target model, or the second node requests the first node to transmit the target model according to a specific condition. If the first node is a UE, the second node may be a network device. If the first node is a network device, the second node may be a UE. The first node and the second node each may be a UE, for example, when the first node is UE1, the second node is UE2. The first node and the second node each may be a network device, for example, when the first node is network device 1, the second node is network device 2.
1. An interaction process of the first node and the second node may include at least one of the following.

For example, the network (or UE) may transmit model A to the UE (or network). The manner of transmitting the model between the network and the UE may include at least one of: directly transmitting the model, and indicating a model ID and/or functionality ID. The model A given by the network (or UE) may be developed under specific conditions (such as a development framework, a version of a development environment, a function library used in development). The UE (or network) may identify, compile, deploy and use the model only under other specific conditions (such as a development framework, a version of a development environment, a function library used in development, etc.). In this case, the network (or UE) may perform model transformation in advance to ensure the normal identification, compilation, deployment, and use of the model at the UE side (or the network side). When the network (or the UE) transmits model A to the UE (or the network), the performing the above-described transformation operation also needs confirming much target model information, for example, the above-described target development condition, such as the target development framework, the target version of the development environment and the library functions supported by the target model. Therefore, the network (or UE) needs transmitting the auxiliary information of the model A to the UE (or network).

As another example, the network (or UE) may transmit a Model A to the UE (or network). The manner of transmitting the model between the network and the UE may include at least one of: directly transmitting a model, and indicating a model ID and/or functionality ID. The network (or UE) may provide the model A constructed under different specific conditions (such as a development framework, a version of a development environment, a function library used in development). When the network (or the UE) transmits the model A to the UE (or the network), the UE (or the network) may indicate and/or request the model A constructed under specific conditions (auxiliary information such as the target development framework, the target version of the development environment, a function library used by the target model) from the network (or the UE)

Taking the above situations as an example, as shown in FIGs. 13 and 14, the second node (UE or network) indicates to and requests auxiliary information of the model from the first node (network or UE) due to different reasons, and then the first node indicates or provides the required target model to the second node. When the first node is a network device, the second node is a UE. When the first node is a UE, the second node is a network device. When the first node is UE1, the second node is UE2. When the first node is network device 1, the second node is network device 2.

The contents of the auxiliary information of the model may include one or more of target development framework information, version information of a target development environment, and supported or used target function library information.

The target development framework information is described below.

Examples of the target development framework information include TensorFlow, PyTorch, ONNX, Keras, Caffe2, MXNet, ML.NET, Scikit-learn, Tensor, Theano, CNTK and other development frameworks.

The indicating the target development framework information has one or more of the following effects: (1) beneficial for the first node to use the corresponding development framework to parse the transmitted model, or (2) beneficial for the first node to perform model transformation based on the target development framework information.

A manner of indicating the target development framework information include, for example, N1 bits such as 6 bits for distinguishing up to 64 different pieces of development framework information, or N1 numbers such as 2 decimal numbers for distinguishing up to 100 different pieces of development framework information.

The version information of the target development environment is described below.

The target development environment information herein may be used for indicating characteristics of the target development environment of the model, such as a version of the target development framework, different versions caused by software update and development, different versions corresponding to different operating systems, and different versions corresponding to different devices.

The version information is, for example, version information (for example, version 2.0, version 2.4, version 2.7) of TensorFlow, version information (for example, version 1.5, version 1.8) of PyTorch, version information of ONNX, version information of Keras, version information of Caffe2, version information of MXNet, version information of ML.NET, version information of Scikit-learn, version information of Tensor, version information of Theano, version information of CNTK, and version information of a model development environment, and for another example, Android version, IOS version.

If the development frameworks adopted by the UE and the network are different, a problem that the model cannot be identified, compiled, deployed and used after the model transmission exists. Similarly, if the UE and the network have inconsistent understanding for the version of the development environment under the same development framework, the above-mentioned model cannot be identified, compiled, deployed and used after the model transmission, and the above-mentioned version information of the development environment of the model should be indicated.

A manner of indicating the version information of the development environment include, for example, N2 bits such as 5 bits for distinguishing up to 32 different pieces of version information of the target development environment or N2 numbers such as 2 decimal numbers for distinguishing up to 100 different pieces of version information of the target development environment.

It should be noted here that the development framework may be indicated independently from or may be indicated jointly with the version of the development environment. In case that the development framework is indicated jointly with the version of the development environment, when the information (bits) indicating the development framework is different, even if the bits indicating the version of the development environment have identical values, the version information of the development environment indicated by the bits indicating the version of the development environment may be different. For example, the first 6 bits in 000001001 indicate a first development framework, and the last 3 bits 001 indicate a first development version under the first development framework, and the first 6 bits in 000002001 indicate a second development framework, and the last 3 bits 001 indicate a first development version under the second development framework.

The supported or used target function library information is described below.

If the supported function libraries of the UE and the network are different, a problem that the model cannot be identified, compiled, deployed and used after transmission may exist. For example, the base station transmits a model to the UE, and a first function library is used in development of the model. If the UE side does not have the first function library when using the model, or a transformation tool does not have the first function library or does not have transformation capability of the first function library when the UE side performs model transformation, the UE side fails to use or transform the model.

The supported and used library information may be indicated by, for example, library information of used TensorFlow, library information of PyTorch, library information of ONNX, library information of Keras, library information of Caffe2, library information of MXNet, library information of ML.NET, library information of Scikit-learn, library information of Tensor, library information of Theano, library information of CNTK, library information related to development of the model, and the like.

A manner of indicating the supported and used library information includes, for example, N3 bits such as 7 bits for distinguishing up to 128 different pieces of target function library information, or N3 numbers such as 2 decimal numbers for distinguishing up to 100 different pieces of target function library information.

Similarly, the supported and used library information may be indicated independently from or jointly with the development framework and the version of the development environment.

A manner of indicating the auxiliary information of the model and a manner of requesting the target model may include one or more of the following manners.

When the UE indicates the auxiliary information of the model to the network, or the UE requests a particular target model, one or more of the following manners may be used: an RRC message, a UCI message, an uplink message in a random access procedure such as MsgA and Msg3, a PUCCH, a PUSCH, an AI/ML-dedicated uplink channel, and UE capability reporting.

When the network indicates the auxiliary information of the model to the UE, or the network requests a particular target model, one or more of the following manners may be used: a broadcast message such as MIB, SIB1, SIBx; an RRC message; an MAC CE; a DCI message; a downlink message in a random access procedure, such as MsgB, Msg2, Msg4; a PDCCH; a PDSCH; a AI/ML-dedicated downlink channel; and network-side capability indication.

Further, in Examples 1 and 2, the auxiliary information of the model may indicate a portion of a model ID or a functionality ID. For example, the auxiliary information of the model indicates a part of the field in the model identification, a part of the field in the functionality identification. Alternatively, the auxiliary information of the model may also be used to determine one of information of the model identification or the functionality identification.

For example, the model identification (or functionality identification) is an identification with the length of X-bit, where Y-bit indicates auxiliary information (such as development framework, a version of a development environment, a function library used in development) of the model.

For example, the model identification (or functionality identification) is an identification with the length of Z-bit, and the auxiliary information (for example, a development framework, a version of a development environment, a function library used for development) of the model is used to confirm the Z-bit information, or is one of the information used to confirm the Z-bit information.

In the above example, a set of auxiliary information may also be received before the first node indicates the auxiliary information. The auxiliary information indicated by the first node may be part or all of the set of auxiliary information.

In a wireless communication system, model transmission is required. However, due to different development frameworks, versions of the environments, library functions and other factors affected on the same model, different vendors or nodes may not implement identification, compilation, deployment, and use for the model even after the model is transmitted between the different vendors or nodes. In the embodiment of the present disclosure, the following two cases can be considered. The first case is that the party providing the model can provide the model under various conditions, such as the conditions of a development framework, a version of an environment, and a library function. The second case is that the party providing the model can only provide the model under a specific condition, such as a condition of a specific development framework, a specific version of an environment, and a specific library function, and the model needs to be transformed at the provider or receiver. In the two cases, the embodiment of the present disclosure provides a solution for indicating the auxiliary information of the model, and in addition to transmission of the model, the transmission of the auxiliary information of the model is introduced to assist the model provider or the receiver in selection, transmission, transformation, and use of the model under a specific condition.

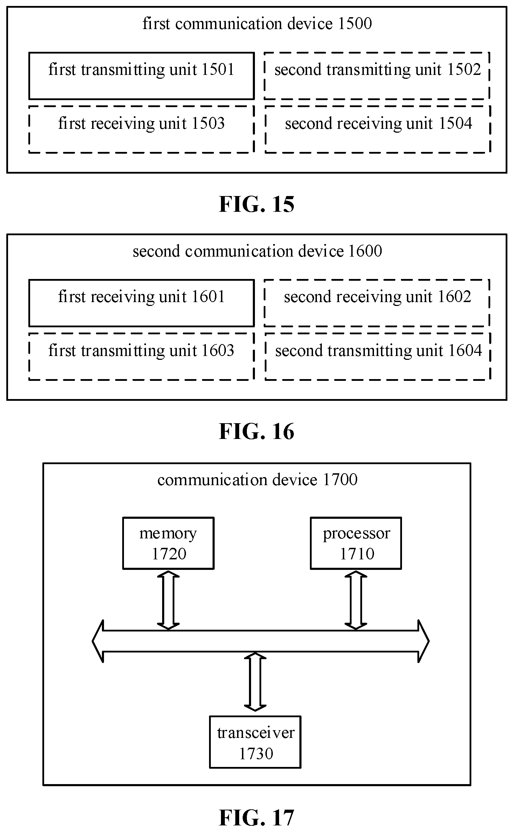

FIG. 15 is a schematic block diagram of a first communication device 1500 according to an embodiment of the present disclosure. The first communication device 1500 may include a first transmitting unit 1501.

The first transmitting unit 1501 is configured to transmit indicating information for indicating auxiliary information corresponding to a target model.

In an embodiment, the first communication device 1500 further includes a second transmitting unit 1502 configured to transmit target model information corresponding to the auxiliary information.

In an embodiment, the first communication device 1500 further includes a first receiving unit 1503 configured to receive target model information corresponding to the auxiliary information.

In an embodiment, the target model information includes at least one of a target model, an identification of a target model, and a functionality identification of the target model.

In an embodiment, the first communication device 1500 further includes a second receiving unit 1504 configured to receive a set of auxiliary information including auxiliary information corresponding to multiple models or auxiliary information of multiple types supported by the second communication device.

In an embodiment, the target model includes one of the multiple models, or the auxiliary information corresponding to the target model is one of auxiliary information of the multiple types supported by the second communication device.

In an embodiment, the auxiliary information is used to assist the second communication device in parsing the target model or transforming the target model, and the second communication device is a device that receives the auxiliary information.

In an embodiment, the first communication device is a network device, and the second communication device that receives the indication information is a terminal device.

In one embodiment, a bearing manner of the indication information includes at least one of a broadcast message, a Radio Resource Control (RRC) message, a Medium Access Control (MAC) control unit (CE), Downlink Control Information (DCI), a downlink message in a random access procedure, a Physical Downlink Control Channel (PDCCH), a Physical Downlink Shared Channel (PDSCH), an artificial intelligence (Al)/machine learning (ML)-dedicated downlink channel, and a network-side capability indication.

In an embodiment, the first communication device is a terminal device, and the second communication device that receives the indication information is a network device.

In an embodiment, a bearing manner of the indication information includes at least one of an RRC message, Uplink Control Information (UCI), an uplink message in a random access procedure, a physical uplink control channel (PUCCH), a physical uplink shared channel (PUSCH), an AI/ML-dedicated uplink channel, and a terminal device capability reporting.

In an embodiment, the first communication device is a first terminal device, and the second communication device that receives the indication information is a second terminal device.

In an embodiment, a bearing manner of the indication information includes at least one of sidelink control information (SCI), a Physical Sidelink Control Channel (PSCCH), and a Physical Sidelink Shared Channel (PSSCH)

In an embodiment, the auxiliary information indicates at least one of: development framework information, version information of a development environment, and function library information used in development.

In an embodiment, the indication information includes a first set of bits for indicating multiple different pieces of development framework information.

In an embodiment, the indication information includes multiple first numerical values for indicating multiple different pieces of development framework information.

In an embodiment, the indication information includes a second set of bits for indicating multiple different pieces of version information of development environments.

In an embodiment, the indication information includes multiple second numerical values for indicating multiple different pieces of version information of development environments.

In one embodiment, the indication information includes a third set of bits for indicating multiple different pieces of function library information used for development.

In an embodiment, the indication information includes multiple third numerical values for indicating multiple different pieces of function library information used for development.

In an embodiment, the indication information includes a fourth set of bits for indicating a combination of at least two of development framework information, version information of a development environment, and function library information used for development.

In an embodiment, the indication information includes multiple fourth numerical values for indicating a combination of at least two of development framework information, version information of a development environment, and function library information used for development.

In an embodiment, the development framework information includes at least one of: TensorFlow, PyTorch, Open Neural Network Exchange ONNX, Keras, Caffe2, MXNet, ML.NET, Scikit-learn, Tensor, Theano, Cognitive Computing Network Toolkit CNTK.

In an embodiment, the version information of the development environment includes at least one of version information of TensorFlow, version information of PyTorch, version information of ONNX, version information of Keras, version information of Caffe2, version information of MXNet, version information of ML.NET, version information of Scikit-learn, version information of Tensor, version information of Theano, version information of CNTK, version information of Android, and version information of IOS.

In an embodiment, the function library information used for the development includes at least one of: Library information of TensorFlow, library information of PyTorch, library information of ONNX, library information of Keras, library information of Caffe2, library information of MXNet, library information of ML.NET, library information of Scikit-learn, library information of Tensor, library information of Theano, and library information of CNTK.

The first communication device 1500 according to the embodiment of the present disclosure can realize the corresponding functions of the first communication device in the above-described method embodiment. The flow, function, implementation mode, and beneficial effect corresponding to each module (sub-module, unit, component, etc.) in the first communication device 1500 can be understood with reference to the corresponding description in the above-described method embodiment, and will not be repeatedly described herein. The functions described with respect to each module (sub-module, unit, component, etc.) in the first communication device 1500 of the embodiment of the present disclosure may be implemented by different modules (sub-modules, units, components, etc.), or may be implemented by the same module (sub-module, unit, component or the like).

FIG. 16 is a schematic block diagram of a second communication device 1600 according to an embodiment of the present disclosure. The second communication device 1600 may include a first receiving unit 1601.

The first receiving unit 1601 is configured to receive indication information for indicating auxiliary information corresponding to a target model.

In an embodiment, the second communication device 1600 further includes a second receiving unit 1602 configured to receive target model information corresponding to the auxiliary information.

In an embodiment, the second communication device 1600 further includes a first transmitting unit 1603 configured to transmit target model information corresponding to the auxiliary information.

In an embodiment, the target model information includes at least one of a target model, an identification of a target model, and a functionality identification of the target model.

In an embodiment, the second communication device 1600 further includes a second transmitting unit 1604 configured to transmit a set of auxiliary information including auxiliary information corresponding to multiple models or auxiliary information of multiple types supported by the second communication device.

In an embodiment, the target model includes one of the multiple models, or the auxiliary information corresponding to the target model is one of auxiliary information of the multiple types supported by the second communication device.

In an embodiment, the auxiliary information is used to assist the second communication device in parsing the target model or transforming the target model, and the second communication device is a device that receives the auxiliary information.

In an embodiment, the second communication device is a terminal device, and the first communication device that transmits the auxiliary information is a network device.

In an embodiment, a bearing manner of the indication information includes at least one of a broadcast message, an RRC message, a MAC CE, DCI, a downlink message in a random access procedure, a PDCCH, a PDSCH, an AI/ML-dedicated downlink channel, and a network-side capability indication.

In an embodiment, the second communication device is a network device, and the first communication device that transmits the auxiliary information is a terminal device.

In an embodiment, a bearing manner of the indication information includes at least one of an RRC message, UCI, an uplink message in a random access procedure, a PUCCH, a PUSCH, an AI/ML-dedicated uplink channel, and a UE capability reporting.

In an embodiment, the second communication device is a second terminal device, and the first communication device that transmits the auxiliary information is a first terminal device.

In an embodiment, a bearing manner of the indication information includes at least one of SCI, a PSCCH, a PSSCH.

In an embodiment, the auxiliary information indicates at least one of: development framework information, version information of a development environment, and function library information used in development.

In an embodiment, the indication information includes a first set of bits for indicating multiple different pieces of development framework information.

In an embodiment, the indication information includes multiple first numerical values for indicating multiple different pieces of development framework information.

In an embodiment, the indication information includes a second set of bits for indicating multiple different pieces of version information of development environments.

In an embodiment, the indication information includes multiple second numerical values for indicating multiple different pieces of version information of development environments.

In one embodiment, the indication information includes a third set of bits for indicating multiple different pieces of function library information used for development.

In an embodiment, the indication information includes multiple third numerical values for indicating multiple different pieces of function library information used for development.

In an embodiment, the indication information includes a fourth set of bits for indicating a combination of at least two of development framework information, version information of a development environment, and function library information used for development.

In an embodiment, the indication information includes multiple fourth numerical values for indicating a combination of at least two of development framework information, version information of a development environment, and function library information used for development.

In an embodiment, the development framework information includes at least one of TensorFlow, PyTorch, ONNX, Keras, Caffe2, MXNet, ML.NET, Scikit-learn, Tensor, Theano, CNTK.

In an embodiment, the version information of the development environment includes at least one of version information of TensorFlow, version information of PyTorch, version information of ONNX, version information of Keras, version information of Caffe2, version information of MXNet, version information of ML.NET, version information of Scikit-learn, version information of Tensor, version information of Theano, version information of CNTK, version information of Android, and version information of IOS.

In an embodiment, the function library information used for the development includes at least one of: Library information of TensorFlow, library information of PyTorch, library information of ONNX, library information of Keras, library information of Caffe2, library information of MXNet, library information of ML.NET, library information of Scikit-learn, library information of Tensor, library information of Theano, and library information of CNTK.

The second communication device 1600 according to the embodiment of the present disclosure can realize the corresponding function of the second communication device in the above-described method embodiment. The flow, function, implementation mode and beneficial effect corresponding to each module (sub-module, unit, component, etc.) in the second communication device 1600 can be understood with reference to the corresponding description in the above-described method embodiment, and will not be repeatedly described herein. The functions described with respect to each module (sub-module, unit, component, etc.) in the second communication device 1600 of the embodiment of the present disclosure may be implemented by different modules (sub-modules, units, components, etc.), or may be implemented by the same module (sub-module, unit, component, or the like).

FIG. 17 is a schematic structural diagram of a communication device 1700 according to an embodiment of the present disclosure. The communication device 1700 includes a processor 1710 that can call and run a computer program from a memory to cause the communication device 1700 to implement the method in the embodiment of the present disclosure.

In an implementation, the communication device 1700 may further include a memory 1720. The processor 1710 may call and run a computer program from the memory 1720 to cause the communication device 1700 to implement the method in the embodiment of the present disclosure.

The memory 1720 may be a separate device independent of the processor 1710 or may be integrated in the processor 1710.

In an embodiment, the communication device 1700 may further include a transceiver 1730. The processor 1710 may control the transceiver 1730 to communicate with other devices, in particular, may transmit information or data to or receive information or data transmitted by other devices.

Here, the transceiver 1730 may include a transmitter and a receiver. The transceiver 1730 may further include antennas, and the number of antennas may be one or more.

In an embodiment, the communication device 1700 may be the first communication device according to the embodiment of the present disclosure, and the communication device 1700 may implement corresponding flows implemented by the first communication device in each method according to the embodiment of the present disclosure, and will not be described herein for the sake of brevity.

In an embodiment, the communication device 1700 may be the second communication device of the embodiment of the present disclosure, and the communication device 1700 may implement corresponding flows implemented by the second communication device in each method of the embodiment of the present disclosure, and will not be described herein for the sake of brevity.

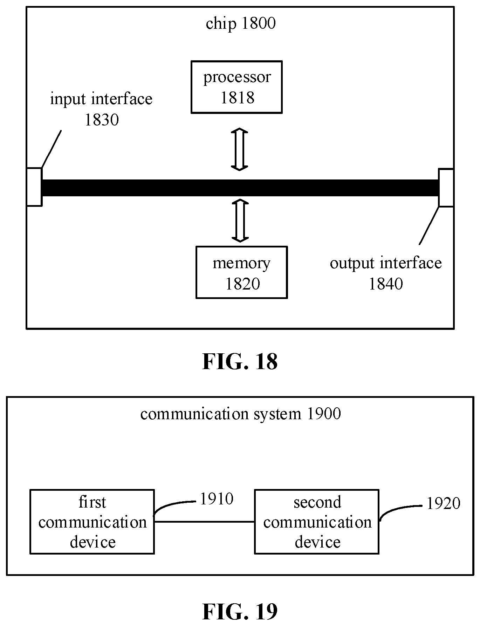

FIG. 18 is a schematic structural diagram of a chip 1800 according to an embodiment of the present disclosure. The chip 1800 includes a processor 1810, which can call and run a computer program from a memory to implement the method in the embodiment of the present disclosure.

In an embodiment, the chip 1800 may further include a memory 1820. Here, the processor 1810 may call and run a computer program from the memory 1820 to implement a method executed by the first communication device or the second communication device in the embodiment of the present disclosure.

The memory 1820 may be a separate device independent of the processor 1810 or may be integrated in the processor 1810.

In an embodiment, the chip 1800 may further include an input interface 1830. The processor 1810 may control the input interface 1830 to communicate with other devices or chips, specifically, may acquire information or data transmitted by other devices or chips.

In an embodiment, the chip 1800 may further include an output interface 1840. The processor 1810 may control the output interface 1840 to communicate with other devices or chips, specifically, may output information or data to other devices or chips.

In an embodiment, the chip can be applied to the first communication device in the embodiment of the present disclosure, and the chip can implement corresponding flows implemented by the first communication device in each method of the embodiment of the present disclosure, and will not be repeatedly described here for the sake of simplicity.

In an embodiment, the chip can be applied to the second communication device in the embodiment of the present disclosure, and the chip can implement corresponding flows implemented by the second communication device in each method of the embodiment of the present disclosure, and will not be repeatedly described here for the sake of simplicity.

The chips applied to the first communication device and the second communication device may be the same chip or different chips.

It should be understood that the chip mentioned in the embodiments of the present disclosure may also be referred to as a system level chip, a system chip, a chip system, or a system-on-chip chip.

The processor mentioned above may be a general-purpose processor, a digital signal processor (DSP), a field programmable gate array (FPGA), an application specific integrated circuit (ASIC) or other programmable logic device, a transistor logic device, a discrete hardware component or the like. The general-purpose processor mentioned above may be a microprocessor or any conventional processor or the like.

The memory mentioned above may be a volatile memory or a non-volatile memory, or may include both volatile memory and non-volatile memory. The non-volatile memory may be a read-only memory (ROM), a programmable read-only memory (PROM), an erasable PROM (EPROM), an electrically EPROM (EEPROM), or a flash memory. The volatile memory may be a random access memory (RAM).

It should be understood that the above memory is exemplified but not restrictive, for example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), and the like. That is, the memory in the embodiments of the present disclosure is intended to include, but is not limited to, these and any other suitable type of memory.

FIG. 19 is a schematic block diagram of a communication system 1900 according to an embodiment of the present disclosure. The communication system 1900 includes a first communication device 1910 and a second communication device 1920.

The first communication device 1910 is configured to transmit indication information for indicating auxiliary information corresponding to a target model.

The second communication device 1920 is configured to receive the indication information.

The first communication device 1910 may be used to implement the corresponding functions implemented by the first communication device in the above-described method, and the second communication device 1920 may be used to implement the corresponding functions implemented by the first communication device in the above-described method. For the sake of brevity, it will not be repeated here.

The embodiments described above can be implemented in whole or in part by software, hardware, firmware, or any combination thereof. When implemented using software, the embodiments may be implemented in whole or in part in the form of a computer program product. The computer program product includes one or more computer instructions. When the computer program instructions are loaded and executed on a computer, the flows or functions according to embodiments of the present disclosure are generated in whole or in part. The computer may be a general-purpose computer, a special-purpose computer, a computer network, or other programmable device. The computer instructions may be stored in a computer-readable storage medium or transmitted from one computer-readable storage medium to another computer-readable storage medium. For example, the computer instructions may be transmitted from a website site, a computer, a server, or a data center to another website site, computer, server, or data center by a wired manner (e.g., a coaxial cable, an optical fiber, a Digital Subscriber Line (DSL)) or a wireless manner (e.g., an infrared, wireless, microwave manner, etc.) means. The computer-readable storage medium may be any available medium accessible by a computer or a data storage device such as a server, a data center, or the like that contains one or more available media integrations. The available medium may be a magnetic medium (e.g., a floppy disk, a hard disk, a magnetic tape), an optical medium (e.g., a DVD), or a semiconductor medium (e.g., a Solid-State Disk (SSD)), etc.

It should be understood that in various embodiments of the present disclosure, the sequence numbers of the above-described processes do not mean the sequence of execution, and the sequence of execution of each process should be determined by its function and internal logic, and should not constitute any limitation on the implementation of the embodiments of the present disclosure.

Those skilled in the art can clearly understand that for convenience and conciseness of the description, the specific operation processes of the systems, devices, and units described above may be understood with reference to the corresponding processes in the aforementioned method embodiments, and will not be repeatedly described herein.

The foregoing is merely specific embodiments of the present disclosure, but the scope of protection of the present disclosure is not limited thereto, and changes or substitutions easily conceived by any person skilled in the art within the technical scope disclosed in the present disclosure should fall within the scope of protection of the present disclosure. Therefore, the scope of protection of the present disclosure should conform with the scope of protection of this claim.

## Claims

1. A communication method, comprising:
transmitting, by a first communication device, indication information for indicating auxiliary information corresponding to a target model.

2. The method of claim 1, further comprising:
transmitting, by the first communication device, target model information corresponding to the auxiliary information.

3. The method of claim 1, further comprising:
receiving, by the first communication device, target model information corresponding to the auxiliary information.

4. The method of claim 2 or 3, wherein the target model information comprises at least one of the target model, an identification of the target model, or a functionality identification of the target model.

5. The method of any one of claims 1 to 4, further comprising:
receiving, by the first communication device, a set of auxiliary information, wherein the set of auxiliary information comprises auxiliary information corresponding to a plurality of models or auxiliary information of a plurality of types supported by a second communication device.

6. The method of claim 5, wherein the target model comprises one of the plurality of models, or the auxiliary information corresponding to the target model is one of the auxiliary information of the plurality of types supported by the second communication device.

7. The method of any one of claims 1 to 6, wherein the auxiliary information is used to assist a second communication device in parsing or transforming the target model, the second communication device being a device which receives the auxiliary information.

8. The method of any one of claims 1 to 7, wherein the first communication device is a network device, and a second communication device which receives the indication information is a terminal device.

9. The method of claim 8, wherein a bearing manner of the indication information comprises at least one of:
a broadcast message, a Radio Resource Control (RRC) message, a Medium Access Control (MAC) control unit (CE), Downlink Control Information (DCI), a downlink message in a random access procedure, a Physical Downlink Control Channel (PDCCH), a Physical Downlink Shared Channel (PDSCH), an artificial intelligence (AI)/machine learning (ML)-dedicated downlink channel, or a network-side capability indication.

10. The method of any one of claims 1 to 6, wherein the first communication device is a terminal device, and a second communication device which receives the indication information is a network device.

11. The method of claim 10, wherein a bearing manner of the indication information comprises at least one of:
a Radio Resource Control (RRC) message, Uplink Control Information (UCI), an uplink message in a random access procedure, a physical uplink control channel (PUCCH), a physical uplink shared channel (PUSCH), an AI/ML-dedicated uplink channel, or a terminal device capability reporting.

12. The method of any one of claims 1 to 6, wherein the first communication device is a first terminal device, and a second communication device which receives the indication information is a second terminal device.

13. The method of claim 12, wherein a bearing manner of the indication information comprises at least one of:
sidelink control information (SCI), a Physical Sidelink Control Channel (PSCCH), or a Physical Sidelink Shared Channel (PSSCH).

14. The method of any one of claims 1 to 13, wherein the auxiliary information indicates at least one of:
development framework information, version information of a development environment, or function library information for development.

15. The method of claim 14, wherein the indication information comprises a first set of bits for indicating a plurality of different pieces of development framework information.

16. The method of claim 14 or 15, wherein the indication information comprises a plurality of first numerical values for indicating a plurality of different pieces of development framework information.

17. The method of any one of claims 14 to 16, wherein the indication information comprises a second set of bits for indicating a plurality of different pieces of version information of development environments.

18. The method of any one of claims 14 to 17, wherein the indication information comprises a plurality of second numerical values for indicating a plurality of different pieces of version information of development environments.

19. The method of any one of claims 14 to 18, wherein the indication information comprises a third set of bits for indicating a plurality of different pieces of function library information for development.

20. The method of any one of claims 14 to 19, wherein the indication information comprises a plurality of third numerical values for indicating a plurality of different pieces of function library information for development.

21. The method of any one of claims 14 to 20, wherein the indication information comprises a fourth set of bits for indicating a combination of at least two of the development framework information, the version information of the development environment, or the function library information for development.

22. The method of any one of claims 14 to 21, wherein the indication information comprises a plurality of fourth numerical values for indicating a combination of at least two of the development framework information, the version information of the development environment, or the function library information for development.

23. The method of any one of claims 14 to 22, wherein the development framework information comprises at least one of: TensorFlow, PyTorch, Open Neural Network Exchange (ONNX), Keras, Caffe2, MXNet, ML.NET, Scikit-learn, Tensor, Theano, or Computational Network Toolkit (CNTK).

24. The method according to any one of claims 14 to 23, wherein the version information of the development environment comprises at least one of version information of TensorFlow, version information of PyTorch, version information of ONNX, version information of Keras, version information of Caffe2, version information of MXNet, version information of ML.NET, version information of Scikit-learn, version information of Tensor, version information of Theano, version information of CNTK, version information of Android, or version information of IOS.

25. The method of any one of claims 14 to 24, wherein the function library information for development comprises at least one of:
library information of TensorFlow, library information of PyTorch, library information of ONNX, library information of Keras, library information of Caffe2, library information of MXNet, library information of ML.NET, library information of Scikit-learn, library information of Tensor, library information of Theano, or library information of CNTK.

26. A communication method, comprising:
receiving, by a second communication device, indication information for indicating auxiliary information corresponding to a target model.

27. The method of claim 26, further comprising:
receiving, by the second communication device, target model information corresponding to the auxiliary information.

28. The method of claim 26, further comprising:
transmitting, by the second communication device, target model information corresponding to the auxiliary information.

29. The method of claim 27 or 28, wherein the target model information comprises at least one of the target model, an identification of the target model, or a functionality identification of the target model.

30. The method of any one of claims 26 to 29, further comprising:
transmitting, by the second communication device, a set of auxiliary information, wherein the set of auxiliary information comprises auxiliary information corresponding to a plurality of models or auxiliary information of a plurality of types supported by the second communication device.

31. The method of claim 30, wherein the target model comprises one of the plurality of models, or the auxiliary information corresponding to the target model is one of the auxiliary information of the plurality of types supported by the second communication device.

32. The method of any one of claims 26 to 31, wherein the auxiliary information is used to assist the second communication device in parsing or transforming the target model, the second communication device being a device which receives the auxiliary information.

33. The method of any one of claims 26 to 32, wherein the second communication device is a terminal device, and a first communication device which transmits the auxiliary information is a network device.

34. The method of claim 33, wherein a bearing manner of the indication information indicating the auxiliary information comprises at least one of:
a broadcast message, a Radio Resource Control (RRC) message, a Medium Access Control (MAC) control unit (CE), Downlink Control Information (DCI), a downlink message in a random access procedure, a Physical Downlink Control Channel (PDCCH), a Physical Downlink Shared Channel (PDSCH), an artificial intelligence (AI) or machine learning (ML)-dedicated downlink channel, or a network-side capability indication.

35. The method of any one of claims 26 to 34, wherein the second communication device is a network device, and a first communication device which transmits the auxiliary information is a terminal device.

36. The method of claim 35, wherein a bearing manner of the indication information comprises at least one of:
a Radio Resource Control (RRC) message, Uplink Control Information (UCI), an uplink message in a random access procedure, a physical uplink control channel (PUCCH), a physical uplink shared channel (PUSCH), an AI/ML-dedicated uplink channel, or a terminal device capability reporting.

37. The method of any one of claims 26 to 36, wherein the second communication device is a second terminal device, and a first communication device which transmits the auxiliary information is a first terminal device.

38. The method of claim 37, wherein a bearing manner of the indication information comprises at least one of sidelink control information (SCI), a Physical Sidelink Control Channel (PSCCH), or a Physical Sidelink Shared Channel (PSSCH).

39. The method of any one of claims 29 to 38, wherein the auxiliary information indicates at least one of:
development framework information, version information of a development environment, or function library information for development.

40. The method of claim 39, wherein the indication information comprises a first set of bits for indicating a plurality of different pieces of development framework information.

41. The method of claim 39 or 40, wherein the indication information comprises a plurality of first numerical values for indicating a plurality of different pieces of development framework information.

42. The method of any one of claims 39 to 41, wherein the indication information comprises a second set of bits for indicating a plurality of different pieces of version information of development environments.

43. The method of any one of claims 39 to 42, wherein the indication information comprises a plurality of second numerical values for indicating a plurality of different pieces of version information of development environments.

44. The method of any one of claims 39 to 43, wherein the indication information comprises a third set of bits for indicating a plurality of different pieces of function library information for development.

45. The method of any one of claims 39 to 44, wherein the indication information comprises a plurality of third numerical values for indicating a plurality of different pieces of function library information for development.

46. The method of any one of claims 39 to 45, wherein the indication information comprises a fourth set of bits for indicating a combination of at least two of the development framework information, the version information of the development environment, or the function library information used for development.

47. The method of any one of claims 39 to 46, wherein the indication information comprises a plurality of fourth numerical values for indicating a combination of at least two of the development framework information, the version information of the development environment, or the function library information used for development.

48. The method of any one of claims 39 to 47, wherein the development framework information comprises at least one of TensorFlow, PyTorch, Open Neural Network Exchange (ONNX), Keras, Caffe2, MXNet, ML.NET, Scikit-learn, Tensor, Theano, or Computational Network Toolkit (CNTK).

49. The method of any one of claims 39 to 48, wherein the version information of the development environment comprises at least one of version information of TensorFlow, version information of PyTorch, version information of ONNX, version information of Keras, version information of Caffe2, version information of MXNet, version information of ML.NET, version information of Scikit-learn, version information of Tensor, version information of Theano, version information of CNTK, version information of Android, or version information of IOS.

50. The method of any one of claims 39 to 49, wherein the function library information for development comprises at least one of:
library information of TensorFlow, library information of PyTorch, library information of ONNX, library information of Keras, library information of Caffe2, library information of MXNet, library information of ML.NET, library information of Scikit-learn, library information of Tensor, library information of Theano, or library information of CNTK.

51. A first communication device, comprising:
a first transmitting unit configured to transmit indication information for indicating auxiliary information corresponding to a target model.

52. The first communication device of claim 51, further comprising:
a second transmitting unit configured to transmit target model information corresponding to the auxiliary information.

53. The first communication device of claim 51, further comprising:
a first receiving unit configured to receive target model information corresponding to the auxiliary information.

54. The first communication device according to claim 52 or 53, wherein the target model information comprises at least one of the target model, an identification of the target model, or a functionality identification of the target model.

55. The first communication device according to any one of claims 51 to 54, further comprising:
a second receiving unit configured to receive a set of auxiliary information, wherein the set of auxiliary information comprises auxiliary information corresponding to a plurality of models or auxiliary information of a plurality of types supported by a second communication device.

56. The method of claim 55, wherein the target model comprises one of the plurality of models, or the auxiliary information corresponding to the target model is one of the auxiliary information of the plurality of types supported by the second communication device.

57. The first communication device according to any one of claims 51 to 56, wherein the auxiliary information is used to assist a second communication device in parsing or transforming the target model, the second communication device being a device which receives the auxiliary information.

58. The first communication device according to any one of claims 51 to 57, wherein the first communication device is a network device, and a second communication device which receives second indication information indicating the auxiliary information is a terminal device.

59. The first communication device according to claim 58, wherein a bearing mode of the indication information indicating the auxiliary information comprises at least one of:
a broadcast message, a Radio Resource Control (RRC) message, a Medium Access Control (MAC) control unit (CE), Downlink Control Information (DCI), a downlink message in a random access procedure, a Physical Downlink Control Channel (PDCCH), a Physical Downlink Shared Channel (PDSCH), an artificial intelligence (AI)/machine learning (ML)-dedicated downlink channel, or a network-side capability indication.

60. The first communication device according to any one of claims 51 to 56, wherein the first communication device is a terminal device, and a second communication device which receives second indication information indicating the auxiliary information is a network device.

61. The first communication device according to claim 60, wherein a bearing mode of the indication information indicating the auxiliary information comprises at least one of:
a Radio Resource Control (RRC) message, Uplink Control Information (UCI), an uplink message in a random access procedure, a physical uplink control channel (PUCCH), a physical uplink shared channel (PUSCH), an AI/ML-dedicated uplink channel, or a terminal device capability reporting.

62. The first communication device according to any one of claims 61 to 66, wherein the first communication device is a first terminal device, and a second communication device which receives second indication information indicating the auxiliary information is a second terminal device.

63. The first communication device according to claim 62, wherein a bearing mode of the indication information indicating the auxiliary information comprises at least one of:
sidelink control information (SCI), a Physical Sidelink Control Channel (PSCCH), or a Physical Sidelink Shared Channel (PSSCH).

64. The first communication device according to any one of claims 51 to 63, wherein the auxiliary information indicates at least one of:
development framework information, version information of a development environment, or function library information for development.

65. The first communication device of claim 64, wherein the indication information indicating the auxiliary information comprises a first set of bits for indicating a plurality of different pieces of development framework information.

66. The first communication device of claim 64 or 65, wherein the indication information indicating the auxiliary information comprises a plurality of first numerical values for indicating a plurality of different pieces of development framework information.

67. The first communication device according to any one of claims 64 to 66, wherein the indication information indicating the auxiliary information comprises a second set of bits for indicating a plurality of different pieces of version information of development environments.

68. The first communication device according to any one of claims 64 to 67, wherein the indication information indicating the auxiliary information comprises a plurality of second numerical values for indicating a plurality of different pieces of version information of development environments.

69. The first communication device of any one of claims 64 to 68, wherein the indication information indicating the auxiliary information comprises a third set of bits for indicating a plurality of different pieces of function library information for development.

70. The first communication device according to any one of claims 64 to 69, wherein the indication information indicating the auxiliary information comprises a plurality of third numerical values for indicating a plurality of different pieces of function library information for development.

71. The first communication device according to any one of claims 64 to 70, wherein the indication information indicating the auxiliary information comprises a fourth set of bits for indicating a combination of at least two of the development framework information, the version information of the development environment, or the function library information for development.

72. The first communication device according to any one of claims 64 to 71, wherein the indication information indicating the auxiliary information comprises a plurality of fourth numerical values for indicating a combination of at least two of the development framework information, the version information of the development environment, or the function library information for development.

73. The first communication device according to any one of claims 64 to 72, wherein the development framework information comprises at least one of: TensorFlow, PyTorch, Open Neural Network Exchange (ONNX), Keras, Caffe2, MXNet, ML.NET, Scikit-learn, Tensor, Theano, or Computational Network Toolkit (CNTK).

74. The first communication device according to any one of claims 64 to 73, wherein the version information of the development environment comprises at least one of version information of TensorFlow, version information of PyTorch, version information of ONNX, version information of Keras, version information of Caffe2, version information of MXNet, version information of ML.NET, version information of Scikit-learn, version information of Tensor, version information of Theano, version information of CNTK, version information of Android, or version information of IOS.

75. The first communication device according to any one of claims 64 to 74, wherein the function library information for development comprises at least one of:
library information of TensorFlow, library information of PyTorch, library information of ONNX, library information of Keras, library information of Caffe2, library information of MXNet, library information of ML.NET, library information of Scikit-learn, library information of Tensor, library information of Theano, or library information of CNTK.

76. A second communication device, comprising:
a first receiving unit configured to receive indication information for indicating auxiliary information corresponding to a target model.

77. The second communication device of claim 76, further comprising:
a second receiving unit configured to receive target model information corresponding to the auxiliary information.

78. The second communication device of claim 76, further comprising:
a first transmitting unit configured to transmit target model information corresponding to the auxiliary information.

79. The second communication device according to claim 77 or 78, wherein the target model information comprises at least one of the target model, an identification of the target model, or a functionality identification of the target model.

80. The second communication device of any one of claims 76 to 79, further comprising:
a second transmitting unit configured to transmit a set of auxiliary information, wherein the set of auxiliary information comprises auxiliary information corresponding to a plurality of models or auxiliary information of a plurality of types supported by the second communication device.

81. The second communication device of claim 80, wherein the target model comprises one of the plurality of models, or the auxiliary information corresponding to the target model is one of the auxiliary information of the plurality of types supported by the second communication device.

82. The second communication device of any one of claims 76 to 81, wherein the auxiliary information is used to assist the second communication device in parsing or transforming the target model, the second communication device being a device which receives the auxiliary information.

83. The second communication device of any one of claims 76 to 82, wherein the second communication device is a terminal device, and a first communication device that transmits the auxiliary information is a network device.

84. The second communication device of claim 83, wherein a bearing manner of the indication information indicating the auxiliary information comprises at least one of:
a broadcast message, a Radio Resource Control (RRC) message, a Medium Access Control (MAC) control unit (CE), Downlink Control Information (DCI), a downlink message in a random access procedure, a Physical Downlink Control Channel (PDCCH), a Physical Downlink Shared Channel (PDSCH), an artificial intelligence (AI)/machine learning (ML)-dedicated downlink channel, or a network-side capability indication.

85. The second communication device of any one of claims 76 to 84, wherein the second communication device is a network device, and a first communication device that transmits the auxiliary information is a terminal device.

86. The second communication device of claim 85, wherein a bearing manner of the indication information indicating the auxiliary information comprises at least one of:
a Radio Resource Control (RRC) message, Uplink Control Information (UCI), an uplink message in a random access procedure, a physical uplink control channel (PUCCH), a physical uplink shared channel (PUSCH), an AI/ML-dedicated uplink channel, or a terminal device capability reporting.

87. The second communication device of any one of claims 76 to 86, wherein the second communication device is a second terminal device, and a first communication device that transmits the auxiliary information is a first terminal device.

88. The second communication device of claim 87, wherein a bearing manner of the indication information indicating the auxiliary information comprises at least one of sidelink control information (SCI), a Physical Sidelink Control Channel (PSCCH), or a Physical Sidelink Shared Channel (PSSCH).

89. The second communication device of any one of claims 79 to 88, wherein the auxiliary information indicates at least one of:
development framework information, version information of a development environment, or function library information for development.

90. The second communication device of claim 89, wherein the indication information indicating the auxiliary information comprises a first set of bits for indicating a plurality of different pieces of development framework information.

91. The second communication device according to claim 89 or 90, wherein the indication information indicating the auxiliary information comprises a plurality of first numerical values for indicating a plurality of different pieces of development framework information.

92. The second communication device of any one of claims 89 to 91, wherein the indication information indicating the auxiliary information comprises a second set of bits for indicating a plurality of different pieces of version information of development environments.

93. The second communication device according to any one of claims 89 to 92, wherein the indication information indicating the auxiliary information comprises a plurality of second numerical values for indicating a plurality of different pieces of version information of development environments.

94. The second communication device according to any one of claims 89 to 93, wherein the indication information indicating the auxiliary information comprises a third set of bits for indicating a plurality of different pieces of function library information for development.

95. The second communication device of any one of claims 89 to 94, wherein the indication information indicating the auxiliary information comprises a plurality of third numerical values for indicating a plurality of different pieces of function library information for development.

96. The second communication device of any one of claims 89 to 95, wherein the indication information indicating the auxiliary information comprises a fourth set of bits for indicating a combination of at least two of the development framework information, the version information of the development environment, or the function library information used for development.

97. The second communication device of any one of claims 89 to 96, wherein the indication information indicating the auxiliary information comprises a plurality of fourth numerical values for indicating a combination of at least two of the development framework information, the version information of the development environment, or the function library information used for development.

98. The second communication device of any one of claims 89 to 97, wherein the development framework information comprises at least one of TensorFlow, PyTorch, Open Neural Network Exchange (ONNX), Keras, Caffe2, MXNet, ML.NET, Scikit-learn, Tensor, Theano, or Computational Network Toolkit (CNTK).

99. The second communication device of any one of claims 89 to 98, wherein the version information of the development environment comprises at least one of version information of TensorFlow, version information of PyTorch, version information of ONNX, version information of Keras, version information of Caffe2, version information of MXNet, version information of ML.NET, version information of Scikit-learn, version information of Tensor, version information of Theano, version information of CNTK, version information of Android, or version information of IOS.

100. The second communication device of any one of claims 89 to 99, wherein the function library information for development comprises at least one of:
library information of TensorFlow, library information of PyTorch, library information of ONNX, library information of Keras, library information of Caffe2, library information of MXNet, library information of ML.NET, library information of Scikit-learn, library information of Tensor, library information of Theano, or library information of CNTK.

101. A communication device comprising a transceiver, a processor and a memory, wherein the memory is configured for storing a computer program, the transceiver is configured for communicating with other device, and the processor is configured for invoking and executing the computer program stored in the memory to cause the communication device to perform the method of any one of claims 1 to 25 or any one of claims 26 to 50.

102. A chip comprising a processor for invoking and running a computer program from a memory to enable a device on which the chip is mounted to perform the method of any one of claims 1 to 25 or any one of claims 26 to 50.

103. A computer-readable storage medium for storing a computer program that, when executed by a device, causes the device to perform the method of any one of claims 1 to 25 or any one of claims 26 to 50.

104. A computer program product comprising computer program instructions that cause a computer to perform the method of any one of claims 1 to 25 or any one of claims 26 to 50.

105. A computer program that causes a computer to perform the method of any one of claims 1 to 25 or any one of claims 26 to 50.
